# EUROPEAN PATENT APPLICATION

(11) **EP 1 109 342 A2**
(43) Date of publication of application: **20.06.2001**
(21) Application number: 00310821.4
(22) Date of filing: 06.12.2000
(51) Int. Cl.: H04J 14/02

(54) **Optical demultiplexing/multiplexing device**

(30) Priority: 17.12.1999 US 465454
(71) Applicant: JDS Uniphase Inc., Nepean, Ontario K2G 5W8 (CA)
(72) Inventor: Farries, Mark, Topsham, Exeter EX3 0AE (GB)
(74) Representative: McKechnie, Neil Henry

(57) **Abstract**

Multiplexor and demultiplexor devices for WDM or DWDM networks are described. The devices use an optical coupler, a plurality of bandpass optical filters, and a plurality of fibre Bragg gratings dispersed amid the bandpass optical filters. Each fibre Bragg grating has a narrow wavelength reflection band about a predetermined wavelength and is disposed next to a bandpass optical filter.

## Description

### Field of the Invention

The present invention relates to an optical multiplexing or demultiplexing device, or more specifically, to an arrangement of wideband filters and narrow reflection band filters for multiplexing and/or demultiplexing optical signals according to wavelength.

### Background of the Invention

Wavelength dependent multiplexing or demultiplexing devices are commonly used in wavelength division multiplexing (WDM) and dense wavelength division multiplexing (DWDM) telecommunications systems, where several channels of information, each at a slightly different wavelength, are carried in the same optical fibre. A multiplexor receives the information via several individual optical signals, and combines these into a single output signal comprising the individual channels. A demultiplexor receives an optical signal having several channels, and separates this signal into independent output signals each corresponding to a different channel, which are individually routed toward different destinations according to wavelength. In general, a single optical device performs the functions of a multiplexor and a demultiplexor, depending on the direction the optical signal is travelling.

Recently the International Telecommunications Union has proposed a DWDM network standard with channels having a frequency separation of 100 GHz (or a wavelength separation of 0.8 nm). Accordingly, the performance requirements for DWDM devices, such as those for bandwidth, crosstalk, polarization dependent loss, polarization mode dispersion, insertion loss, are more stringent. The ability to minimize light losses at any of the desired channel wavelengths, and to minimize "crosstalk"--that is, the reflection of small amounts of light from other channels into the path designated for one specific channel are particularly important.

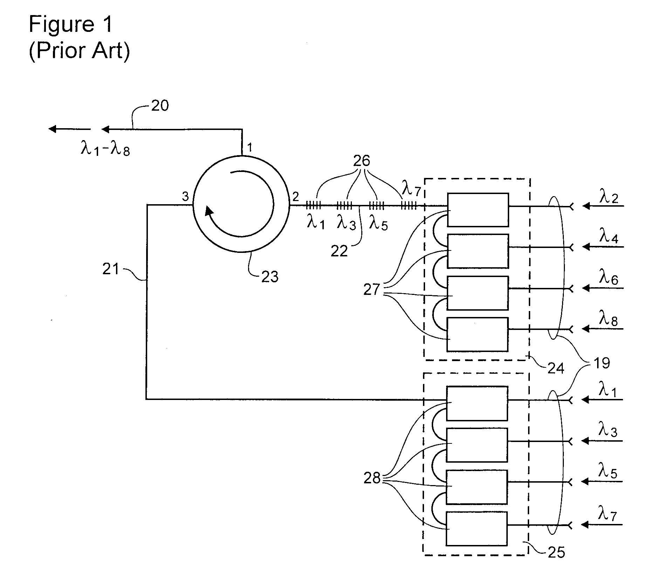

U.S. Patent No. 5,748,350 to Pan et al. incorporated herein by reference, discloses a multiplexor/demultiplexor device to overcome these stringent requirements. The device comprises an optical circulator, a plurality of bandpass wavelength division units, and a plurality of fibre Bragg gratings arranged in the optical fibres interconnecting the optical circulator and the bandpass wavelength division units (Fig. 1) The optical circulator is connected to a network optical fibre and the bandpass wavelength division units are connected to a plurality of input/output optical fibres. The bandpass wavelength division units comprise serially connected bandpass wavelength division couplers. The Bragg gratings separate the channels by reflecting one wavelength into a separate optical path while allowing all of the other wavelengths to continue through the original fibre. The fibre Bragg gratings are connected serially to one another.

However, the multiplexor/demultiplexor of patent `350 has certain drawbacks. The fact that the optical signal must pass through each serially connected fibre Bragg grating is a significant design limitation. This disadvantage results from the unwanted cladding modes generated when the optical signal passes though the fibre Bragg gratings written to conventional single mode optical fibre. In particular, the optical signal is significantly degraded due to insertion loss and insertion loss ripple. In general, these cladding mode phenomena occur 1.2 to 1.5 nm below the Bragg wavelength. As a result, the plurality of Bragg gratings intended to enhance the isolation between wavelengths and minimize crosstalk between communication channels causes transmission losses in channels having central wavelengths shorter than the Bragg wavelength.

For example, in the optical device disclosed in U.S.

Patent `350 the optical signal comprising channels λ₁-λ₈ passes through four serially connected fibre Bragg gratings having a narrow reflection bands about wavelengths λ₂, λ₄, λ₆, and λ₈. The optical signal that has traversed the serially connected fibre Bragg gratings comprises channels having central wavelengths λ₁, λ₃, λ₅, and λ₇. Of each of these channels, only the channel having a central wavelength λ₇ is substantially unaffected. Passing through the Bragg gratings substantially degrades the optical signal corresponding to the other channels, which have central wavelengths at least 1.2 nm less than the highest Bragg wavelength λ₈.

Another disadvantage of the optical device disclosed in U.S. patent `350, is the signal loss attributed to a portion of the optical signal passing though optical elements that are not essential for demultiplexing said portion of the optical signal. For example, when the optical signal corresponding to channels having central wavelengths λ₁-λ₈ is demultiplexed to eight independent signals, each corresponding to channels having central wavelengths λ₁-λ₈, the signal corresponding to the channel having central wavelength λ₁ will have traversed four fibre Bragg gratings having narrow reflection bands about wavelengths λ₂, λ₄, λ₆, and λ₈ and a bandpass filter having a central wavelength λ₁. However, to separate precisely a signal corresponding to a channel having a central wavelength λ₁ it is only necessary to pass the optical signal corresponding to channels having central wavelengths λ₁-λ₈ through a fibre Bragg gratings having a narrow reflection band about wavelength λ₂ and a bandpass filter having a central wavelength λ₁. Passing the optical signal through the additional fibre Bragg gratings having narrow reflection bands about wavelengths λ₄, λ₆, and λ₈, only serves to unnecessarily degrade the output optical signals.

In an ideal optical arrangement, the plurality of optical elements is arranged so that all portions of the optical signal only traverse essential optical elements. Furthermore, the arrangement of optical elements should be such that an output optical signal having a central wavelength of λₙ will only traverse fibre Bragg gratings with narrow reflection bands below or equal to λₙ₊₁.

It is an object of this invention to provide a multiplexor/demultiplexor comprising a plurality of fibre Bragg gratings and a plurality of bandpass optical filters, for use with single mode optical fibre.

It is another object of this invention to provide a multiplexor/demultiplexor using an arrangement of narrow reflection band filters and wideband filters, wherein the placement of narrow reflection band filters limits the number of unwanted cladding modes.

It is another object of this invention to provide a multiplexor/demultiplexor using an arrangement of fibre Bragg gratings and dichroic bandpass filters, wherein the arrangement of fibre Bragg gratings is designed to minimize signal losses associated with serial arrangements of the same.

### Summary of the Invention

The present invention relates to a
multiplexor/demultiplexor device constructed from a plurality of narrow reflection band filters and wideband filters for demultiplexing an optical signal carrying several channels of information, each at a slightly different wavelength, to several individual optical signals, each carrying a single channel of information. Alternatively, the device is used for multiplexing several individual optical signals, each carrying a single channel of information, to a single optical signal carrying several channels of information.

Each narrow reflection band filter is used to separate a sub-signal from the multiplexed optical signal, wherein the sub-signal corresponds to a single channel from one of n closely spaced channels of the multiplexed optical signal. Each wideband filter is used to separate the resulting sub-signal corresponding to at least two channels or group of channels, which are separated by the channel space created in removing the single channel with the preceding narrow reflection band filter. The arrangement of narrow reflection band filters and wideband filters is designed to maximize the efficiency of the multiplexor/demultiplexor, and to minimize insertion loss and insertion loss ripple.

In accordance with the present invention, an optical device for multiplexing/demultiplexing an optical signal comprises:
at least one input port;
a plurality of narrow reflection band filters for reflecting predetermined wavelengths of the optical signal, the plurality of narrow reflection band filters optically coupled to the at least one input port; and
a plurality of wideband filters for transmitting other predetermined wavelengths of the optical signal, the plurality of wideband filters optically coupled to the plurality of narrow reflection band filters;
said plurality of narrow reflection band filters and said plurality of wideband filters having a staggered arrangement, wherein a first narrow reflection band filter is directly coupled to an end of a first wideband filter, the first wideband filter directly coupled to an end of a second narrow reflection band filter, and another end of the second narrow reflection band filter is directly coupled to an end of a second wideband filter,
   wherein the first narrow reflection band filter is for removing a portion of the optical signal having a wavelength greater than a predetermined wavelength of the first wideband filter, the second narrow reflection band filter is for removing a portion of the optical signal having a wavelength greater than a predetermined wavelength of the second wideband filter, and the first narrow reflection band filter is for removing a portion of the optical signal having a wavelength less than the wavelength of a portion of the optical signal removed by the second narrow reflection band filter.

In accordance with the invention there is further provided, a optical device for demultiplexing a multiplexed optical signal to n sub-signals, each sub-signal corresponding to one of n channels, each channel having a different central wavelength, a 1^{st} channel having a lowest central wavelength λ₁, an n^{th} channel having a highest central wavelength λₙ, and each of n-1 channels having a central wavelength lower than a subsequent channel, said optical device comprising:
an input port for receiving the multiplexed optical signal;
a plurality of fibre Bragg gratings optically coupled to the input port;
a plurality of bandpass filters optically coupled to the plurality of fibre Bragg gratings; and
a plurality of output ports optically coupled to the plurality of bandpass filters, each output port for transmitting one of the n sub-signals,
said plurality of fibre Bragg gratings and said plurality of bandpass filters arranged so that a portion of the multiplexed optical signal corresponding to a channel m, and having a central wavelength λₘ, only passes through fibre Bragg gratings having narrow reflection bands below or equal to λₘ₊₁, wherein m is less than or equal to n.

In accordance with the present invention there is further provided, an optical device for demultiplexing a multiplexed optical signal to n sub-signals, each sub-signal corresponding to one of n channels, each channel having a slightly different central wavelength, a 1^{st} channel having a lowest central wavelength λ₁, an n^{th} channel having a highest central wavelength λₙ, and each of n-1 channels having a central wavelength lower than a subsequent channel, said optical device comprising:
an input port for receiving the multiplexed optical signal;
a plurality of fibre Bragg gratings optically coupled to the input port;
a plurality of bandpass filters optically coupled to the plurality of fibre Bragg gratings, each of the plurality of bandpass filters directly coupled to at least one fibre Bragg grating; and
a plurality of output ports optically coupled to the plurality of bandpass filters, each output port for transmitting one of the n sub-signals,
said plurality of fibre Bragg gratings and said plurality of bandpass filters forming at least two alternating series of a fibre Bragg grating directly coupled to a bandpass filter, the fibre Bragg grating for separating closely spaced adjacent channels, and the bandpass filter for further separating non-adjacent channels.

In accordance with the present invention there is further provided, an optical device for demultiplexing a multiplexed composite channelized optical signal to n sequential sub-signals corresponding to n sequential channels, each channel having a different central wavelength, a 1^{st} channel having a lowest central wavelength λ₁, an n^{th} channel having a highest central wavelength λₙ, and each of n-1 channels having a central wavelength lower than a subsequent channel, said optical device comprising:
a first optical waveguide for carrying the multiplexed composite channelized optical signal;
a first fibre Bragg grating having an end for coupling to the first optical waveguide, the first fibre Bragg grating for blocking a channel having a central wavelength λ₂ and for passing channels having central wavelengths λ₁ and λ₃-λₙ;
a first bandpass filter coupled to another end of the first fibre Bragg grating, the first bandpass optical filter for diverting channels having central wavelengths λ₃-λₙ and for demultiplexing a sub-signal corresponding to a channel having a central wavelength λ₁;
a second fibre Bragg grating having an end for coupling to the first bandpass filter, the second fibre Bragg grating for blocking a channel having a central wavelength λ₄ and for passing channels having central wavelengths λ₃, and λ₅-λₙ; and
a second bandpass filter coupled to another end of the second fibre Bragg grating, the second bandpass optical filter for diverting channels having central wavelengths λ₅-λₙ and for demultiplexing a sub-signal corresponding to a channel having a central wavelength λ₃.

In accordance with the present invention there is provided, an optical device for demultiplexing a multiplexed composite channelized optical signal to n sequential sub-signals corresponding to n sequential channels, each channel having a different central wavelength, a 1^{st} channel having a lowest central wavelength λ₁, an n^{th} channel having a highest central wavelength λₙ, and each of n-1 channels having a central wavelength lower than a subsequent channel, said optical device comprising:
an optical coupler having first, second and third ports, said third port for receiving the multiplexed composite channelized composite optical signal, said first and second ports for dividing the multiplexed composite channelized composite optical signal into first and second sub-signals, a first sub-signal passing through a plurality of optical elements for demultiplexing to n/2 sub-signals corresponding to channels having central wavelengths λₙ, λₙ₋₂, λₙ₋₄, ....λ₂, and a second sub-signal passing through a second plurality of optical elements for demultiplexing to n/2 sub-signals corresponding to channels having central wavelengths λₙ₋₁, λₙ₋₃, λₙ₋₅, ...λ₁,
said first plurality of optical elements comprising a plurality of bandpass filters for passing a portion of the first sub-signal having central wavelengths corresponding to λₙ, λₙ₋₂, λₙ₋₄, **...**. λ₂, and a plurality of fibre Bragg gratings for reflecting another portion of the first sub-signal having central wavelengths corresponding to λₙ₋₁, λₙ₋₃, λₙ₋₅, ...λ₁,
said second plurality of optical elements comprising a plurality of other bandpass filters for passing a portion of the second sub-signal having central wavelengths corresponding to λₙ₋₁, λₙ₋₃, λₙ₋₅, ...λ₁, and a plurality of other fibre Bragg gratings for reflecting another portion of the second sub-signal having central wavelengths corresponding to λₙ, λₙ₋₂, λₙ₋₄, ....λ₂,
said first and second plurality of optical elements each comprising at least two alternating series of a fibre Bragg grating directly coupled to a bandpass filter, wherein each alternating series is directly coupled to another, and wherein the fibre Bragg grating is for reflecting a portion of the optical signal having a centre wavelength which is greater than a predetermined centre wavelength of the bandpass filter.

### Brief Description of the Drawings

Preferred embodiments of the invention will now be described by way of example with reference to the accompanying drawings, in which;
Fig. 1 is a prior art schematic representation of an 8-channel optical demultiplexor;
Fig. 2 is a schematic representation of an 8-channel optical demultiplexor according to one embodiment of the present invention; and
Fig. 3 is a cross sectional side view of a dichroic bandpass filter.

### Detailed Description

The demultiplexor of the present invention includes a plurality of narrow reflection band filters optically coupled to a plurality of wideband filters, for cooperatively demultiplexing a multiplexed optical signal corresponding to a group of channels. Each of the narrow reflection band filters is for separating a sub-signal corresponding to a single channel, from the multiplexed optical signal corresponding to at least two channels having closely spaced and adjacent central wavelengths. Each of the coarser wideband filters is for further separating two non-adjacent channels or groups of channels. The term 'demultiplexor,' as used herein, encompasses any device used to separate a particular wavelength from an optical signal comprising a plurality of different wavelengths.

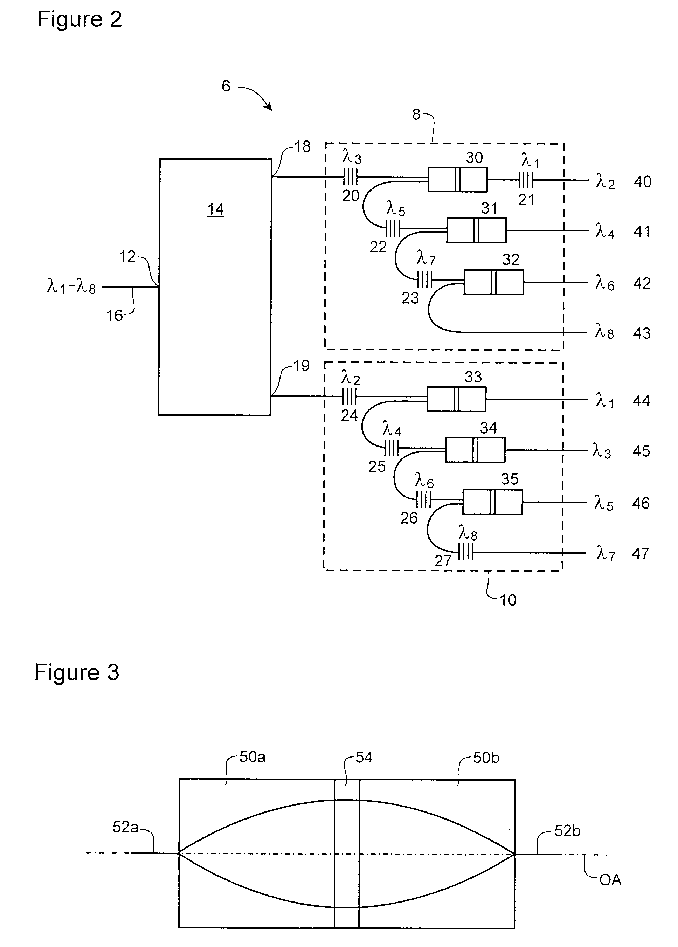

Referring to Fig. 2, an eight-channel demultiplexor 6 according to an embodiment of the present invention is shown. The demultiplexor includes an optical coupler 14 having three ports, a plurality of narrow reflection band filters in the form of fibre Bragg gratings 20-27, and a plurality of wideband filters in the form of dichroic bandpass filters 30-35. Each of the fibre Bragg gratings are directly coupled to one of the dichroic bandpass filters. The term 'directly coupled', as used herein, refers to a coupling of two elements, absent other optical components between the two elements, except perhaps a connecting optical waveguide. This is in contrast to the term 'optically coupled', wherein the coupling of two elements via an optical pathway, does not exclude intermediate optical elements.

The optical arrangement shown in Fig. 2 is divided into two sections, each section comprising a plurality of fibre Bragg gratings and dichroic bandpass filters. The first section 8 optically couples port 18 of the optical coupler 14 to output ports 40-43. The second section 10 optically couples port 19 of the optical coupler 14 to output ports 44-47. The optical coupler optically couples the first 8 and second 10 sections via first 18 and second ports 19, respectively. The optical coupler also includes an input port 12, which is optically coupled to the first 8 and second 10 sections.

The optical arrangement of each section is such that a portion of the plurality of fibre Bragg gratings and dichroic bandpass filters forms at least two alternating series of a fibre Bragg grating directly coupled to a dichroic bandpass filter. In the first branch 8, a first alternating series is formed from fibre Bragg grating 20 and dichroic bandpass filter 30, an end of fibre Bragg grating 20 directly coupled to an end of dichroic bandpass filter 30. Similarly, a second alternating series is formed from fibre Bragg grating 22 and dichroic bandpass filter 31, and a third alternating series is formed from fibre Bragg grating 23 and dichroic bandpass filter 32. Each of the alternating series is coupled to another, e.g. dichroic bandpass filter 30 is directly coupled to fibre Bragg grating 22, and dichroic bandpass filter 31 is directly coupled to fibre Bragg grating 23. In the second branch 10, a first alternating series is formed from fibre Bragg grating 24 and dichroic bandpass filter 33, a second alternating series formed from fibre Bragg grating 25 and dichroic bandpass filter 34, and a third alternating series formed from fibre Bragg grating 26 and dichroic bandpass filter 35. Fibre Bragg gratings 21 and 27 are directly coupled to dichroic bandpass filters 30 and 35, respectively. Each of the output ports 40-47 is directly coupled to one of the fibre Bragg gratings or one of the dichroic bandpass filters.

In operation, a multiplexed composite channelized optical signal carrying channels having central wavelengths λ_{□}□□_{□} is launched into input port 12 of optical coupler 14 via waveguide 16. Each channel has a different central wavelength, the 1^{st} channel has the lowest central wavelength λ₁, the 8^{th} channel has the highest central wavelength λ₈, and each of the channels from 1-7 has a central wavelength lower than a subsequent channel.

The optical coupler 14 divides the optical signal into two sub-signals, each sub-signal carrying channels having central wavelengths λ_{□}□□_{□}□□□ The first sub-signal travels from port 18 to fibre Bragg grating 20 having a narrow wavelength reflection band λ₃. The portion of the signal having a central wavelength λ₃ is reflected in a backwards direction away from the fibre Bragg grating 20, while the remaining portion of the signal having central wavelengths λ_{□}□□_{□}□ and λ_{□}□□_{□}□ passes through the fibre Bragg grating 20 where it is incident upon the dichroic filter 30. Dichroic filter 30 receives the optical signal corresponding to the non-adjacent groups of channels λ_{□}□□_{□}□ and λ_{□}□□_{□}□□ and separates said optical signal into two sub-signals corresponding to channels having central wavelengths λ_{□}□□_{□} □ and λ_{□}□□_{□}□□□ The optical signal corresponding to channels having central wavelengths λ_{□}□□_{□} travels to fibre Bragg grating 21 having narrow wavelength reflection band λ_{□}, wherein the portion of the signal having a central wavelength λ _{□} is reflected in a backwards direction away from fibre Bragg grating 21, while the demultiplexed sub-signal having a central wavelength □_{□}□ travels to output port 40. The optical signal corresponding to channels having central wavelengths λ_{□}□□_{□}□ travels from dichroic filter 30 to fibre Bragg grating 22 having narrow reflection band λ₅. The portion of the signal having central wavelength λ₅ is reflected in a backwards direction away from fibre Bragg grating 22, while the remaining portion of the signal having central wavelengths λ_{□}□ and λ_{□}□□_{□}□ passes through fibre Bragg grating 22 where it is incident upon the dichroic filter 31. Dichroic filter 31 receives the optical signal corresponding to non-adjacent groups of channels λ_{□□□} and λ_{□}□□_{□}□□ and separates said optical signal into two sub-signals corresponding to channels having central wavelengths λ_{□}□ and λ_{□}□□_{□}□□□ The demultiplexed sub-signal having a central wavelength optical signal λ_{□}□ travels to output port 41, while the sub-signal corresponding to channels having central wavelengths λ_{□}□□_{□} travels to fibre Bragg grating 23 having narrow wavelength reflection band λ₇. The portion of the signal having a central wavelength λ□ is reflected in a backwards direction away from fibre Bragg grating 23, while the remaining portion of the signal having central wavelengths λ_{□}□ and □_{□} is incident upon dichroic bandpass filter 32. The signal incident upon dichroic bandpass filter 32 is demultiplexed into a sub-signal corresponding to a channel having a central wavelength λ₆, which is passed on to output port 42, and to a sub-signal corresponding to a channel having central wavelength λ₈, which is passed on to output port 43. In summary, the first sub-signal corresponding to channels λ_{□}□□_{□} exiting from port 18 of the optical coupler 14, is demultiplexed into four sub-signals, each corresponding to a channel having an even central wavelength, i.e., λ_{□}□□□_{□}, λ_{□}□□ and □_{□}. Similarly, a second sub-signal exiting from port 19 of the optical coupler 14, is demultiplexed into four sub-signals, each corresponding to a channel having an odd central wavelength i.e., λ_{□} □□□_{□}, λ_{□}□□ and □_{□}.

The eight-channel demultiplexor has been chosen for illustrative purposes only. In general, the demultiplexor is used to demultiplex an n channel optical signal to n individual sub-signals, where n is greater than or equal to four. Optionally, a portion of the demultiplexor e.g., section 8, is used to demultiplex the multiplexed optical signal.
It is also to be understood that the demultiplexor operates in the reverse direction as a multiplexor. Accordingly, the demultiplexor is referred to as a multiplexor/demultiplexor, the optical coupler is referred to as an optical splitter/coupler, the input port is referred to as an input/output port, and the output ports are referred to as input/output ports.

In the embodiment illustrated in Fig 2, the waveguides are single-mode optical fibres. The optical coupler is used to receive the multiplexed optical signal from the input optical fibre 16, and to split the multiplexed optical signal into two multiplexed sub-signals. Obviously, the optical coupler, e.g. a 3 dB coupler, a fused fibre coupler, a fused biconical coupler, or a waveguide divider coupler, is not necessary for effective use of the demultiplexer. Furthermore, to compensate for the signal intensity loss incurred when the optical signal is split in half, the demultiplexer optionally includes an amplifier for amplifying the optical signal, e.g. an erbium-doped fibre amplifier.

Also in the embodiment illustrated in Fig 2, the narrow reflection band filters are fibre Bragg gratings and the wideband filters are dichroic bandpass filters. Fibre Bragg gratings are regions of refractive index perturbations within a waveguiding element that serve to reflect incident light of predetermined wavelength(s). The reflection bands are very narrow and precise. Dichroic bandpass filters are constructed from at least a pair of collimating graded index (GRIN) lenses, with a thin optical element such as a dichroic thin film filter sandwiched therebetween. Dichroic bandpass filters transmit light of predetermined wavelength(s) and reflect/redirect light at other wavelengths. The bandpass is substantially larger than the reflection band of a common Bragg grating. Fig. 3 illustrates a cross sectional side view of a dichroic bandpass filter. The pair of GRIN lenses 50a and 50b are shown having their collimating ends inwardly facing and their focusing ends outwardly facing. Two optical waveguides 52a and 52b are shown coaxial with and directly coupled to the lenses along the optical axis (OA) of the lenses 50a and 50b, shown by a dotted line. A beam profile is also shown within the lenses 50a and 50b as if light was launched from one of the waveguides 52a and 52b to a respective lens. An optical element in the form of a dichroic thin film filter 54 is shown disposed between the lenses.

The use of a fibre Bragg gratings and dichroic bandpass filters in the instant invention provides a number of advantages over other narrow reflection band filters and wideband filters, however, the invention is not limited to these filters. Essentially, an important feature of the instant invention is that a precise, narrow band filter is used cooperatively with a courser wide band filter, to demultiplex a multiplexed optical signal.

Moreover, the staggered arrangement of fibre Bragg gratings and dichroic bandpass filters is particularly important. When an end of a first fibre Bragg grating is directly coupled to a first dichroic bandpass filter, the first fibre Bragg grating is used to separate a single channel from the closely spaced adjacent channels, and the dichroic bandpass filter is used for further separating non-adjacent channels. When a first fibre Bragg grating is directly coupled to a first dichroic bandpass filter, which in turn is directly coupled to a second fibre Bragg grating, which in turn is directly coupled to a second fibre Bragg grating, the first Bragg grating is used to remove a wavelength band greater than a predetermined wavelength of the first dichroic bandpass filter, the second fibre Bragg grating is used to remove a wavelength band greater than a predetermined wavelength of the second dichroic bandpass filter, and the first fibre Bragg grating is used to remove a wavelength band less than the wavelength band removed by the second fibre Bragg grating. In other words, the plurality of fibre Bragg gratings and plurality of bandpass filters are arranged so that a portion of the multiplexed optical signal corresponding to a channel m, and having a central wavelength λₘ, only passes through fibre Bragg gratings having narrow reflection bands below or equal to λₘ₊₁.

For example, the ordering of fiber Bragg gratings is such that each of the demultiplexed optical sub-signals corresponding to channels λ₁-λ₈ will have passed through a fiber Bragg grating having a reflection band that is adjacent to and higher than the central wavelength of the passed channel. In section 10 of the demultiplexer, a demultiplexed sub-signal having a central wavelength λ₂ will have passed through a fiber Bragg grating having a narrow reflection band λ₃, a demultiplexed sub-signal having a central wavelength λ₄ will have passed through a fiber Bragg grating having a narrow reflection band λ_{5,} and a demultiplexed sub-signal having a central wavelength λ₆ will have passed through a fiber Bragg grating having a narrow reflection band λ₇. Consequently, each section (8 or 10) of the demultiplexer will have passed either even or odd channels, i.e., channels having central wavelengths corresponding to λ₂, λ₄, λ₆, λ₈ or corresponding to λ₁, λ₃, λ₅, λ₇, respectively.

Furthermore, the staggered arrangement illustrated in Fig. 2 shows an ordering of fibre Bragg gratings that limits coupling to radiation or cladding modes and prevents the optical signal from passing through optical elements unnecessarily. Specifically, the optical signal corresponding to a channel having a central wavelength λ₅ will pass through fibre Bragg gratings having reflection bands λ₂, λ₄, and λ₆ (24, 25, and 26, respectively) before it passes through dichroic bandpass filter 35. Since the cladding modes generally occur 1.2 to 1.5 nm below the Bragg wavelength of the corresponding filter, λ₅ will be substantially unaffected, i.e., it will not be converted into radiation or cladding modes. This design allows the present invention to overcome the drawbacks of the prior art. Specifically, insertion loss and insertion loss ripple is substantially attenuated.

Of course numerous other embodiments and advantages may be envisaged without departing from the spirit and scope of the invention.

## Claims

1. An optical device for multiplexing/demultiplexing an optical signal, said optical device comprising:
at least one input port;
a plurality of narrow reflection band filters for reflecting predetermined wavelengths of the optical signal, the plurality of narrow reflection band filters optically coupled to the at least one input port; and
a plurality of wideband filters for transmitting other predetermined wavelengths of the optical signal, the plurality of wideband filters optically coupled to the plurality of narrow reflection band filters;
said plurality of narrow reflection band filters and said plurality of wideband filters having a staggered arrangement, wherein a first narrow reflection band filter is directly coupled to an end of a first wideband filter, the first wideband filter directly coupled to an end of a second narrow reflection band filter, and another end of the second narrow reflection band filter is directly coupled to an end of a second wideband filter, wherein the first narrow reflection band filter is for removing a portion of the optical signal having a wavelength greater than a predetermined wavelength of the first wideband filter, the second narrow reflection band filter is for removing a portion of the optical signal having a wavelength greater than a predetermined wavelength of the second wideband filter, and the first narrow reflection band filter is for removing a portion of the optical signal having a wavelength less than the wavelength of a portion of the optical signal removed by the second narrow reflection band filter.

2. An optical device as defined in claim 1, wherein said plurality of narrow reflection band filters and said plurality of wideband filters are arranged such that an optical signal launched into the first narrow reflection band filter is incident upon the first wideband filter before being passed through the second narrow reflection band filter, and, wherein the plurality of narrow reflection band filters are in fibre Bragg gratings and the plurality of wideband filters are dichroic bandpass filters.

3. An optical device for demultiplexing a multiplexed optical signal to n sub-signals, each sub-signal corresponding to one of n channels, each channel having a different central wavelength, a 1^{st} channel having a lowest central wavelength λ₁, an n^{th} channel having a highest central wavelength λₙ, and each of n-1 channels having a central wavelength lower than a subsequent channel, said optical device comprising:
an input port for receiving the multiplexed optical signal;
a plurality of fibre Bragg gratings optically coupled to the input port;
a plurality of bandpass filters optically coupled to the plurality of fibre Bragg gratings; and
a plurality of output ports optically coupled to the plurality of bandpass filters, each output port for transmitting one of the n sub-signals,
said plurality of fibre Bragg gratings and said plurality of bandpass filters arranged so that a portion of the multiplexed optical signal corresponding to a channel m, and having a central wavelength λₘ, only passes through fibre Bragg gratings having narrow reflection bands below or equal to λₘ₊₁, wherein m is less than or equal to n.

4. An optical device as defined in claim 3, wherein said plurality of fibre Bragg gratings and said plurality of bandpass filters are arranged so that a portion of the multiplexed optical signal passes through at least two alternating series of a fibre Bragg grating directly coupled to a bandpass filter.

5. An optical device as defined in claim 4, wherein said plurality of fibre Bragg gratings and said plurality of bandpass filters are arranged so that a portion of the multiplexed optical signal corresponding to a channel p, and having central wavelength λₚ, only passes through fibre Bragg gratings having narrow reflection bands selected from λₙ, λₙ₋₂, λₙ₋₄,....λ₂, where p is an odd number less than n.

6. An optical device as defined in claim 4, wherein said plurality of fibre Bragg gratings and said plurality of bandpass filters are arranged so that a portion of the multiplexed optical signal corresponding to a channel q, and having central wavelength λ_{q}, only passes through fibre Bragg gratings having narrow reflection bands selected from λₙ₋₁, λₙ₋₃, λₙ₋₅, ...λ₁, where q is an even number less than or equal to n.

7. An optical device for demultiplexing a multiplexed optical signal to n sub-signals, each sub-signal corresponding to one of n channels, each channel having a slightly different central wavelength, a 1^{st} channel having a lowest central wavelength λ₁, an n^{th} channel having a highest central wavelength λₙ, and each of n-1 channels having a central wavelength lower than a subsequent channel, said optical device comprising:
an input port for receiving the multiplexed optical signal;
a plurality of fibre Bragg gratings optically coupled to the input port;
a plurality of bandpass filters optically coupled to the plurality of fibre Bragg gratings, each of the plurality of bandpass filters directly coupled to at least one fibre Bragg grating; and
a plurality of output ports optically coupled to the plurality of bandpass filters, each output port for transmitting one of the n sub-signals,
said plurality of fibre Bragg gratings and said plurality of bandpass filters forming at least two alternating series of a fibre Bragg grating directly coupled to a bandpass filter, the fibre Bragg grating for separating closely spaced adjacent channels, and the bandpass filter for further separating non-adjacent channels.

8. An optical device for demultiplexing a multiplexed composite channelized optical signal to n sequential sub-signals corresponding to n sequential channels, each channel having a different central wavelength,
a 1^{st} channel having a lowest central wavelength λ₁,
an n^{th} channel having a highest central wavelength λₙ, and each of n-1 channels having a central wavelength lower than a subsequent channel, said optical device comprising:
a first optical waveguide for carrying the multiplexed composite channelized optical signal;
a first fibre Bragg grating having an end for coupling to the first optical waveguide, the first fibre Bragg grating for blocking a channel having a central wavelength λ₂ and for passing channels having central wavelengths λ₁ and λ₃-λₙ;
a first bandpass filter coupled to another end of the first fibre Bragg grating, the first bandpass optical filter for diverting channels having central wavelengths λ₃-λₙ and for demultiplexing a sub-signal corresponding to a channel having a central wavelength λ₁;
a second fibre Bragg grating having an end for coupling to the first bandpass filter, the second fibre Bragg grating for blocking a channel having a central wavelength λ₄ and for passing channels having central wavelengths λ₃, and λ₅-λₙ; and
a second bandpass filter coupled to another end of the second fibre Bragg grating, the second bandpass optical filter for diverting channels having central wavelengths λ₅-λₙ and for demultiplexing a sub-signal corresponding to a channel having a central wavelength λ₃.

9. An optical device as defined in claim 8, further comprising an optical coupler having three ports, a third port for launching the multiplexed composite channelized optical signal into the optical device, a first port and a second port for dividing the multiplexed composite channelized optical signal into two sub-signals, the first port optically coupled to the first optical waveguide.

10. An optical device as defined in claim 9, further comprising:
a second optical waveguide optically coupled to the second port of the optical coupler,
a third fibre Bragg grating having an end for coupling to the second optical waveguide, the third fibre Bragg grating for blocking a channel having a central wavelength λ₃ and for passing channels having central wavelengths λ₁-λ₂ and λ₄-λₙ;
a third bandpass filter coupled to another end of the third fibre Bragg grating, the third bandpass optical filter for diverting channels having central wavelengths λ₄-λₙ and for passing sub-signals corresponding to channels having a central wavelengths λ₁ and λ₂;
a forth fibre Bragg grating having an end for coupling to the third bandpass filter, the forth fibre Bragg grating for blocking a channel having a central wavelength λ₁ and for passing and demultiplexing a sub-signal with a channel having central wavelength λ₂;
a fifth fibre Bragg grating having an end for coupling to the third bandpass filter, the fifth fibre Bragg grating for blocking a channel having a central wavelength λ₅ and for passing a sub-signal with channels having central wavelengths λ₄, λ₆-λₙ; and
a forth bandpass filter coupled to another end of the fifth fibre Bragg grating, the forth bandpass optical filter for passing channels having central wavelengths λ₅-λₙ, and for demultiplexing a sub-signal corresponding to a channel having a central wavelength λ₄.

11. An optical device for demultiplexing a multiplexed composite channelized optical signal to n sequential sub-signals corresponding to n sequential channels, each channel having a different central wavelength,
a 1^{st} channel having a lowest central wavelength λ₁,
an n^{th} channel having a highest central wavelength λₙ, and each of n-1 channels having a central wavelength lower than a subsequent channel, said optical device comprising:
an optical coupler having first, second and third ports, said third port for receiving the multiplexed composite channelized composite optical signal, said first and second ports for dividing the multiplexed composite channelized composite optical signal into first and second sub-signals, a first sub-signal passing through a plurality of optical elements for demultiplexing to n/2 sub-signals corresponding to channels having central wavelengths λₙ, λₙ₋₂, λₙ₋₄, ....λ₂, and a second sub-signal passing through a second plurality of optical elements for demultiplexing to n/2 sub-signals corresponding to channels having central wavelengths λₙ₋₁, λₙ₋₃, λₙ₋₅, ...λ₁,
said first plurality of optical elements comprising a plurality of bandpass filters for passing a portion of the first sub-signal having central wavelengths corresponding to λₙ, λₙ₋₂, λₙ₋₄, ....λ₂, and a plurality of fibre Bragg gratings for reflecting another portion of the first sub-signal having central wavelengths corresponding to λₙ₋₁, λₙ₋₃, λₙ₋₅, ...λ₁,
said second plurality of optical elements comprising a plurality of other bandpass filters for passing a portion of the second sub-signal having central wavelengths corresponding to λₙ₋₁, λₙ₋₃, λₙ₋₅, ...λ₁, and a plurality of other fibre Bragg gratings for reflecting another portion of the second sub-signal having central wavelengths corresponding to λₙ, λₙ₋₂, λₙ₋₄, ....λ₂,
said first and second plurality of optical elements each comprising at least two alternating series of a fibre Bragg grating directly coupled to a bandpass filter, wherein each alternating series is directly coupled to another, and wherein the fibre Bragg grating is for reflecting a portion of the optical signal having a centre wavelength which is greater than a predetermined centre wavelength of the bandpass filter.
